# EUROPEAN PATENT SPECIFICATION

(11) **EP 4 343 923 B1**
(45) Date of publication and mention of the grant of the patent: **02.07.2025**
(21) Application number: 23197274.6
(22) Date of filing: 13.09.2023
(51) Int. Cl.: H01M 10/613, H01M 10/647, H01M 10/6556, H01M 10/6568, H01M 50/211, H01M 50/209, H01M 10/04

(54) **CASE FOR BATTERY MODULE AND BATTERY PACK**
GEHÄUSE FÜR BATTERIEMODUL UND BATTERIEPACK
BOÎTIER POUR MODULE DE BATTERIE ET BLOC-BATTERIE

(30) Priority: 26.09.2022 KR 20220121545
(43) Date of publication of application: 27.03.2024
(73) Proprietor: SK On Co., Ltd., Seoul 03161 (KR)
(72) Inventor: SHIN, Suk Ho, 34124 Daejeon (KR); KANG, Min Song, 34124 Daejeon (KR); KIM, Ji Woong, 34124 Daejeon (KR); PAK, Byeong Jun, 34124 Daejeon (KR); PARK, Ju Yong, 34124 Daejeon (KR); HAN, Jin Su, 34124 Daejeon (KR)
(74) Representative: Stolmár & Partner Patentanwälte PartG mbB

(56) References cited:
- CN-A- 102 170 034
- CN-A- 112 290 158
- US-A1- 2020 395 643
- US-A1- 2021 143 498
- US-A1- 2021 391 609

## Description

### TECHNICAL FIELD

The present disclosure relates to a case for a battery module and a battery pack.

### BACKGROUND

In general, a battery module is formed to have a structure in which a plurality of cells are aggregated through a series connection and/or parallel connections. Such a battery module typically includes a cell assembly in which a plurality of cells are arranged and stacked in one direction, and a frame having plates configured to accommodate the cell assembly.

Furthermore, the battery module is designed to have a cooling channel through which a coolant for cooling battery cells flows. However, process costs are increased by adding separate components to install such a cooling channel. Cases for a battery module are described, for example, in prior art documents D1 to D5 listed below.

### [Prior Art Document]

### [Patent Document]

Korean Patent No. 10-2130818
US 2020/395643 A1 (D1)
US 2021/143498 A1 (D2)
US 2021/391609 A1 (D3)
CN 102 170 034 A (D4)
CN 112 290 158 A (D5)

### SUMMARY

One aspect of the present disclosures provides a case for a battery module that can reduce assembly processes during assembly.

A case for a battery module according to one embodiment of the present disclosures may include: a body having an internal space; and an end plate disposed on an end of the body, wherein the body may include a bottom plate having at least one coolant flow path through which a coolant flows, and the end plate may include a coolant flow tube through which the coolant flows and at least one connection portion extending from the coolant flow tube and coupled to the at least one coolant flow path of the bottom plate.

The end plate includes a plate portion having a lattice shape on one surface thereof and an extension portion extending from the plate portion, and the coolant flow tube is connected to an end of the extension portion.

The coolant flow tube may be formed integrally with the plate portion of the end plate.

The at least one connection portion may comprise plural connection portions and the plural connection portions extend toward the bottom plate, and the coolant flow paths are coupled to the plural connection portions.

The coolant flow tube may be formed along a bottom end of one surface of the end plate.

The coolant flow tube may be formed along a top end and a bottom end of one surface of the end plate.

When the end plate is coupled to the body, the connection portion may be coupled to the coolant flow path of the bottom plate.

One surface of the plate portion may be lattice-shaped.

The coolant flow tube, the plate portion, the extension portion, and the connection portion may be integrally molded.

A battery pack according to another embodiment of the present disclosure may include: a plurality of battery modules, each including a case for a battery module, wherein the case for the battery module includes a body having an internal space, and an end plate disposed on an end of the body, wherein the body includes a bottom plate having at least one coolant flow path through which a coolant flows, and wherein the end plate includes a coolant flow tube through which the coolant flows and at least one connection portion extending from the coolant flow tube and coupled to the at least one coolant flow path of the bottom plate, wherein the end plate includes a plate portion having a lattice shape on one surface thereof and an extension portion extending from the plate portion, and the coolant flow tube is connected to an end of the extension portion; and a frame arranged to surround the plurality of battery modules.

The frame may have a band shape in which a top portion and a bottom portion thereof is open.

The plurality of battery modules may be disposed in adjacent battery cases, and the coolant flow tube in a first battery case may be connected to an adjacent coolant flow tube in a second battery case through a connection hose.

The frame may include a coolant inlet and a coolant outlet, and the coolant flow tube may be connected to the coolant inlet or the coolant outlet.

In some embodiments of the present disclosures, assembly processes can be reduced during assembly.

### BRIEF DESCRIPTION OF DRAWINGS

FIG. 1 is a perspective view illustrating a case for a battery module according to one embodiment of the present disclosure.
FIG. 2 is a perspective view illustrating an end plate of a case for a battery module according to another embodiment of the present disclosure.
FIG. 3 is a perspective view illustrating an end plate at an angle different from that of FIG. 2.
FIG. 4 is a descriptive view illustrating a coolant flow path provided on a bottom plate of a case for a battery module according to still another embodiment of the present disclosure.
FIG. 5 is a perspective view illustrating a case in which cases for a battery module according to yet another embodiment of the present disclosure are disposed adjacently to each other.
FIG. 6 is an exploded perspective view illustrating a battery pack accommodating a plurality of battery modules according to another embodiment of the present disclosure.

### DETAILED DESCRIPTION

Features of the present disclosure are described by embodiments with reference to the accompanying drawings. The disclosure relates to a case for a battery module and a battery pack. Hereinafter, with reference to the drawings, embodiments of the present disclosure will be described. However, the scope of the present invention is not limited to the disclosed embodiments. Furthermore, embodiments of the present disclosure are provided to describe the disclosures to those skilled in the art. In the drawings, the shapes and dimensions of elements may be exaggerated for further clarity.

Furthermore, singular forms herein may include their plural forms unless the context clearly indicates otherwise, and throughout this specification, the same reference numerals refer to the same component or to a corresponding component.

Furthermore, it should be noted in advance that the expressions such as "above," "top," "below", "beneath," "bottom," "side, " "front, " and "rear" are based on the direction illustrated in the drawings, and may be expressed differently if the direction of the object is changed.

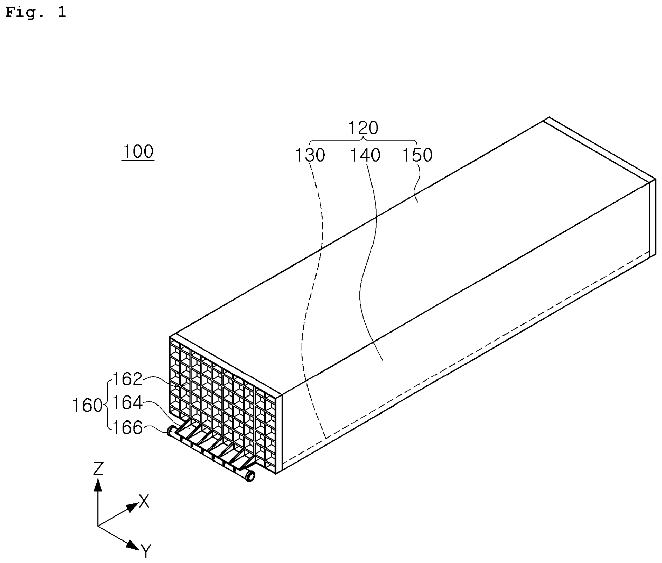

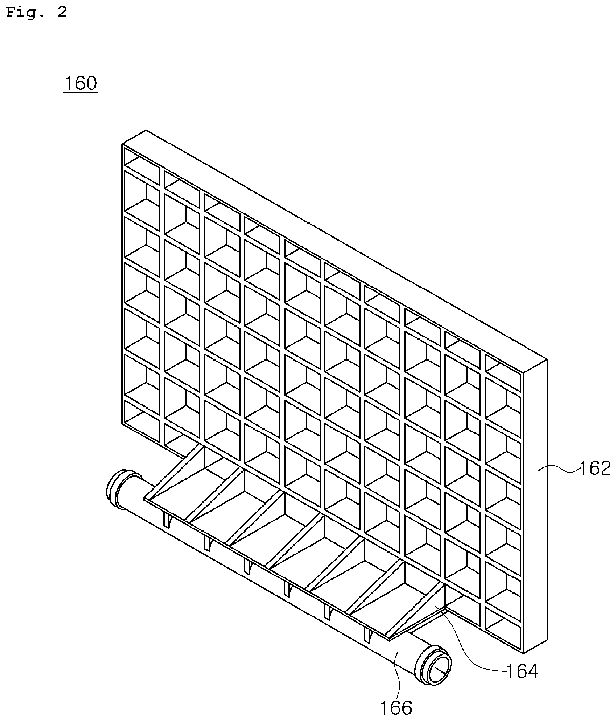

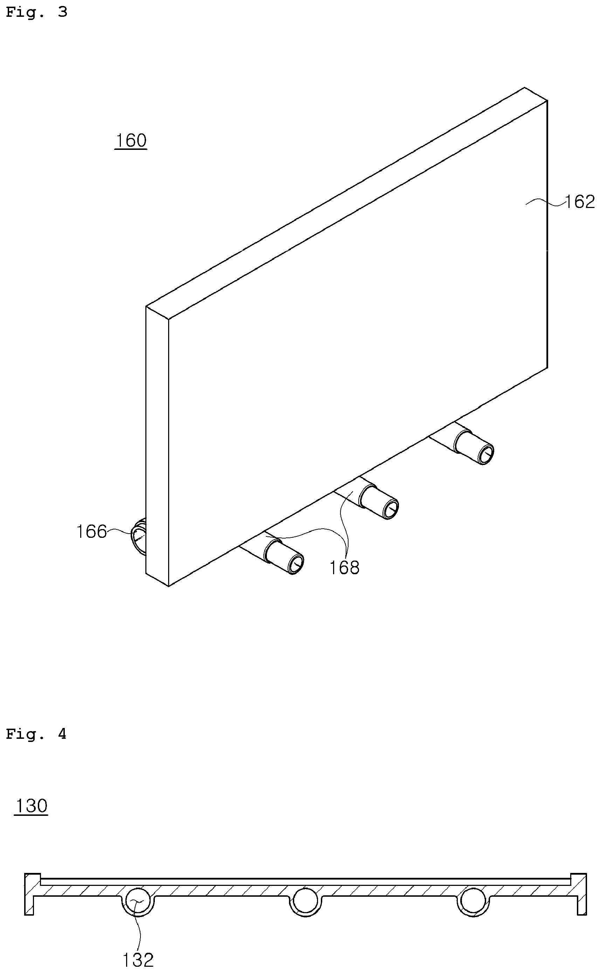

FIG. 1 is a perspective view illustrating a case for a battery module according to one embodiment of the present disclosure, FIG. 2 is a perspective view illustrating an end plate of a case for a battery module according to another embodiment of the present disclosure, FIG. 3 is a perspective view illustrating an end plate at an angle different from that of FIG. 2, and FIG. 4 is a descriptive view illustrating a coolant flow path provided on a bottom plate of a case for a battery module according to yet another embodiment of the present disclosure.

Referring to FIGS. 1 to 4, a case 100 for a battery module according to one embodiment of the present disclosure includes a body 120 and an end plate 160.

The body 120 has an internal space. The body 120 may include a bottom plate 130, a side plate 140, and a top plate 150. The bottom plate 130, the side plate 140, and the top plate 150 may be coupled to have a rectangular cuboid shape in which both ends are open. Furthermore, the bottom plate 130 and the side plate 140 may be integrally formed and may have a shape in which the top plate 150 is coupled thereto. Furthermore, the bottom plate 130, the side plate 140, and the top plate 150 may be, for example, metal plates such as relatively thin aluminum plates.

The bottom plate 130 includes a coolant flow path 132 through which a coolant flows, and the coolant flow path 132 may be provided in plural on the bottom plate 130. Furthermore, the coolant flow path 132 may have a circular tubular shape, as shown in FIG. 4, providing a passage for coolant flow. However, the disclosed technology is not limited thereto, and the shape of the coolant flow path 132 may have other shapes Slits may be provided on a top surface of the bottom plate 130 to form a plurality of rows in which battery cells are inserted according to respective shapes thereof (e.g., a prismatic shape, a cylindrical shape, a pouch type, and the like). For example, a plurality of slits may be spaced apart from each other in an X-axis direction of FIG. 1.

The side plate 140 may be coupled to both sides of the bottom plate 130 and may have a shape having a narrow width and a long length. That is, the side plate 140 may have a plate shape having a long length in the X-axis direction of FIG. 1 and a relatively shorter length in a Z-axis direction of FIG. 1.

The top plate 150 is disposed to face the bottom plate 130. For example, the top plate 150 may be coupled to a top surface of the side plate 140 and may have a rectangular plate shape. Additionally, the top plate 150 may be provided with slits disposed to form a plurality of rows in which battery cells are inserted.

Furthermore, the side plate 140 and the top plate 150 may be formed integrally with each other. In this case, the side plate 140 and the top plate 150 formed integrally with each other are coupled to the bottom plate 130.

Here, pouch cells (or otherwise referred to as battery cells) are disposed in an internal space of the case 100 for a battery module, with each of the pouch cells having a thin plate-shaped body, and having a structure in which an anode, a separator, and a cathode are alternately stacked and an electrode tab is drawn out to at least one side thereof. The anode and the cathode can be manufactured by coating a slurry such as an electrode active material, a binder resin, a conductive agent, and other additives, on at least one surface of a current collector. As the electrode active material, positive electrode active materials such as a lithium-containing transition metal oxide may be used for the anode, and cathode active materials such as lithium metal, a carbon material, and a metal compound, and/or mixtures thereof, in which lithium ions may be absorbed and discharged, may be used for the cathode. Furthermore, a porous polymer film used in a lithium secondary battery may be adopted as the separator.

As an electrolyte accommodated in the pouch case together with the electrode assembly, an electrolyte for a lithium secondary battery may be adopted. The pouch case is formed of a sheet material and includes an accommodation portion for accommodating an electrode assembly. For example, the pouch case is formed by combining a first case and a second case formed by processing a sheet material to have a predetermined shape. The sheet material forming the pouch case may be comprised of a multilayer structure comprising a stack of an outermost external resin layer formed of an insulating material such as polyethylene terephthalate (PET) or nylon, an aluminum metal layer for maintaining mechanical strength and preventing penetration of moisture and oxygen, and an internal resin layer formed of a polyolefin-based material having thermal adhesiveness and serving as a sealing material.

In the sheet material forming the pouch case, an adhesive resin layer may be interposed between the internal resin layer and the metal layer and between the external resin layer and the metal layer. The adhesive resin layer may be formed in a single layer or multiple layers for smooth adhesion between heterogeneous materials, and a material thereof may generally be a polyolefin-based resin or a polyurethane resin for smooth processing, or a mixture thereof may be adopted as the material.

Meanwhile, a plurality of pouch cells may be arranged in one direction. For example, the plurality of pouch cells may be spaced apart from each other in the X-axis direction of FIG. 1.

Here, an example (in which a battery cell installed in the case 100 for the battery module is a pouch cell) is described, but the battery cell is not limited thereto a pouch cell, and the battery cell may be a prismatic battery cell in which an electrode assembly is accommodated in a rectangular cuboid shape housing.

When the battery cell is a prismatic cell, an anode tab and a cathode tab may be configured to be drawn out to a top portion (in the Z-axis direction of FIG. 1) and the prismatic battery cells may be stacked in the X-axis direction of FIG. 1 and may be seated in the battery module case. Furthermore, the anode tab and the cathode tab may be configured to be drawn out on both sides or one side in the Y-axis direction of FIG. 1, respectively.

The end plate 160 is coupled to both ends of the body 120. On the other hand, the end plate 160 includes a plate portion 162 having a lattice shape on one side thereof, an extension portion 164 extending from the plate portion 162, a coolant flow tube 166 connected to an end of the extension portion 164, and a connection portion 168 (as illustrated in FIG. 3) extending from the coolant flow tube 166 to the bottom plate 130 of the body 120.

One surface of the plate portion 162 has a lattice shape. Accordingly, the plate portion 162 may better withstand pressing force due to swelling generated by a plurality of battery cells. Accordingly, the battery cells may be more firmly connected to each other in the X-axis direction of FIG. 1 while limiting the swelling of the battery cells.

The extension portion 164 may extend from one surface of the plate portion 162 and may be disposed in a bottom end portion of the plate portion 162. The extension portion 164 serves to connect the plate portion 162 and the coolant flow tube 166. On the other hand, the shape of the extension portion 164 is not limited to the shape illustrated in FIG. 2, and may also be a bar shape connecting the plate portion 162 and the coolant flow tube 166.

The coolant flow tube 166 has a circular tube shape and provides a flow path through which the coolant flows. For example, the coolant flow tube 166 may be disposed in parallel with the plate portion 162.

The connection portion 168 may extend from the coolant flow tube 166 to the bottom plate 130, and may have a circular tube shape to be coupled to the coolant flow path 132 of the bottom plate 130. In this manner, the connection portion 168 may be connected to the coolant flow path 132 of the bottom plate 130, as illustrated in FIG. 4, thus providing a coolant supplied to the coolant flow tube 166 to the coolant flow path 132 of the bottom plate 130. Furthermore, a plurality of connection portions 168 may be spaced apart from each other.

The plate portion 162, the extension portion 164, the coolant flow tube 166, and the connection portion 168 of the end plate 160 may be integrally molded. Accordingly, the end plate 160 may be installed in the body 120 by connecting the connection portion 168 to the coolant flow path 132 of the bottom plate 130, thereby completing the assembly without installing separate components. Namely, simply combining the end plate 160 with the body 120 may lead to completion of the assembly process of the case 100 for a battery module, reducing the assembly processes.

In the embodiment described above, an example in which the coolant flow tube 166 is configured in a bottom end of the plate portion 162 has been described, but the coolant flow tube 166 may be configured in both a top end and a bottom end of the plate portion 162. In this case, the coolant flow path 132 is formed not only on the bottom plate 130 but also on the top plate 150 to cool both top and bottom portions (Z-direction) of the battery cell, thereby improving cooling efficiency.

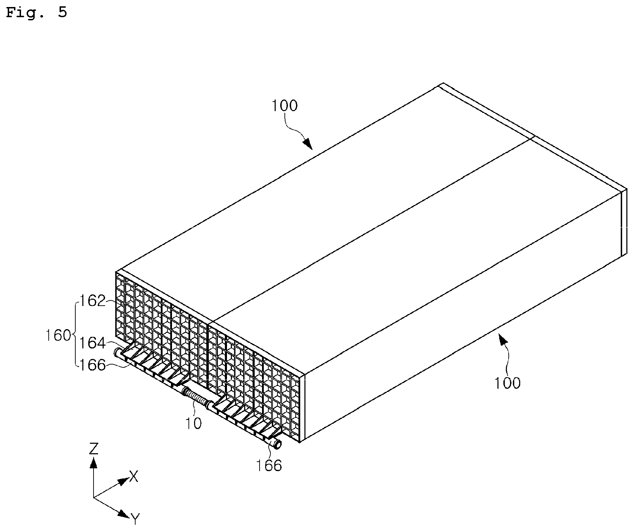

FIG. 5 is a perspective view illustrating a case in which cases for a battery module according to another embodiment of the present disclosure are disposed adjacently to each other.

As illustrated in FIG. 5, when cases 100 for a battery module case are disposed adjacently to each other, a coolant flow tube 166 may be connected through a connection hose 10. In this manner, when a plurality of cases for a battery module are disposed adjacently to each other, the coolant flow tube 166 may be connected by the connection hose 10, thereby completing a connection operation of the coolant flow tube 166.

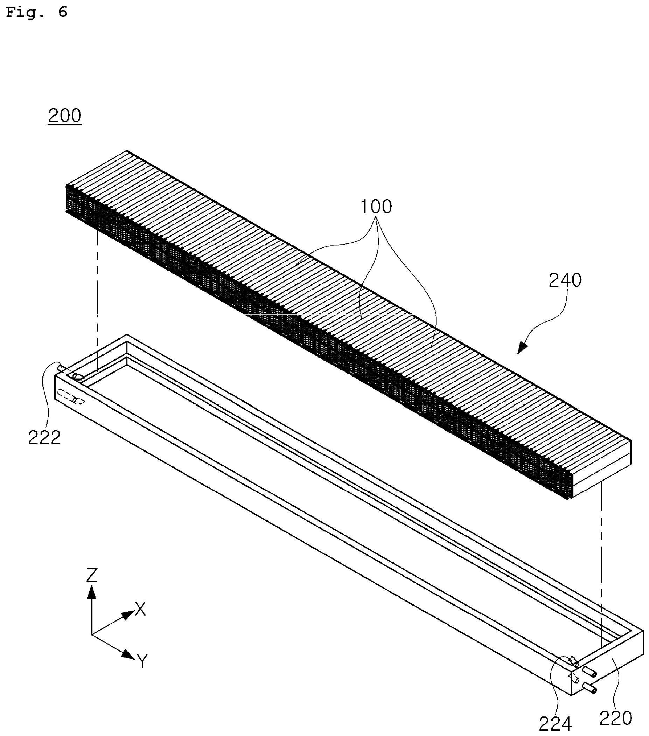

FIG. 6 is an exploded perspective view illustrating a battery pack accommodating a plurality of battery modules according to still another embodiment of the present disclosure.

Referring to FIG. 6, a battery pack 200 includes a frame 220 and a plurality of battery modules 240 in which cases 100 for a battery module are connected to each other. On the other hand, the frame 220 of the battery pack 200 may be equipped with a coolant inlet 222 and a coolant outlet 224 through which a coolant may flow in and out, and the coolant flow tube 166 (illustrated in FIG. 1) provided in the case 100 for a battery module case (illustrated in FIG. 1) may be connected to a coolant inlet 222 or a refrigerant outlet 224. Top and bottom portions of the battery pack 200 may be configured in an open state that does not completely enclose the battery modules 240. For example, the frame 220 may have a rectangular band shape (as shown in FIG. 6) disposed to surround a plurality of battery modules 240. In more detail, for example, a cooling plate may be disposed in a bottom portion of a battery pack, and a pack top plate may be disposed in a top portion thereof, so that a plurality of battery modules (each having a separate module case) are accommodated in an internal space formed by a frame, a cooling plate, and a pack top plate. However, an overall structure of the battery pack 200 may be simplified through a plurality of battery modules 240 equipped with the case 100 for a battery module according to one embodiment of the present disclosure. Accordingly, the capacity of the battery cell may be increased by increasing the size of the battery cell in a height direction (Z-direction in FIG. 6) .

Although various embodiments of the present disclosure have been described in detail above, the scope of the invention is not limited thereto, and it will be apparent to those skilled in the art that modifications and variations could be made without departing from the scope of the invention, as defined by the appended claims. For example, some components may be deleted and implemented in the above-described embodiments, and each of the embodiments may be combined and implemented with each other, without departing from the scope of the appended claims. The invention is defined by the appended claims.

## Claims

1. A case (100) for a battery module comprising:
a body (120) having an internal space; and
an end plate (160) disposed on an end of the body (120),
wherein the body (120) includes a bottom plate (130) having at least one coolant flow path (132) through which a coolant flows, and
wherein the end plate (160) includes a coolant flow tube (166) through which the coolant flows and at least one connection portion (168) extending from the coolant flow tube (166) and coupled to the at least one coolant flow path (132) of the bottom plate (130),
**characterized in that** the end plate (160) includes a plate portion (162) having a lattice shape on one surface thereof and an extension portion (164) extending from the plate portion (162), and the coolant flow tube (166) is connected to an end of the extension portion (164).

2. The case (100) for a battery module of claim 1, wherein the coolant flow tube (166) is formed integrally with the plate portion (162) of the end plate (160).

3. The case (100) for a battery module of claim 2, wherein the at least one connection portion (168) comprises plural connection portions (168), and the plural connection portions (168) extend toward the bottom plate (130), and
wherein plural coolant flow paths (132) are coupled to the plural connection portions (168).

4. The case (100) for a battery module of claim 1, wherein the coolant flow tube (166) is formed along a bottom end of one surface of the end plate (160).

5. The case (100) for a battery module of claim 1, wherein the coolant flow tube (166) is formed along a top end and a bottom end of one surface of the end plate (160).

6. The case (100) for a battery module of claim 1, wherein, when the end plate (160) is coupled to the body (120), the connection portion (168) is coupled to the coolant flow path (166) of the bottom plate (130).

7. The case (100) for a battery module of claim 1, wherein one surface of the plate portion (162) is lattice-shaped.

8. The case (100) for a battery module of claim 1, wherein the coolant flow tube (166), the plate portion (162), the extension portion (164), and the connection portion (168) are integrally molded.

9. A battery pack (200) comprising:
a plurality of battery modules (240), each comprising a case (100) for a battery module according to claim 1; and
a frame (220) arranged to surround the plurality of battery modules (240) .

10. The battery pack (200) of claim 9, wherein the frame has (220) a band shape in which a top portion and a bottom portion thereof is open.

11. The battery pack (200) of claim 9, wherein the plurality of battery modules (240) are disposed in adjacent battery cases (100), the coolant flow tube (166) in a first battery case (100) is connected to an adjacent coolant flow tube (166) in a second battery case (100) through a connection hose (10).

12. The battery pack (200) of claim 11, wherein the frame (220) includes a coolant inlet (222) and a coolant outlet (224), and
wherein the coolant flow tube (166) is connected to the coolant inlet (222) or the coolant outlet (224).

## Patentansprüche

1. Ein Gehäuse (100) für ein Batteriemodul, das umfasst:
einen Körper (120) mit einem Innenraum; und
eine Endplatte (160), die an einem Ende des Körpers (120) angeordnet ist,
wobei der Körper (120) eine Bodenplatte (130) enthält, die mindestens einen Kühlmittelströmungsweg (132) aufweist, durch den ein Kühlmittel fließt, und
wobei die Endplatte (160) ein Kühlmittelströmungsrohr (166), durch das das Kühlmittel strömt, und mindestens einen Verbindungsabschnitt (168), der sich von dem Kühlmittelströmungsrohr (166) erstreckt und mit dem mindestens einen Kühlmittelströmungsweg (132) der Bodenplatte (130) verbunden ist, enthält,
**dadurch gekennzeichnet, dass** die Endplatte (160) einen Plattenabschnitt (162) mit einer Gitterform auf einer Oberfläche davon und einen Verlängerungsabschnitt (164), der sich von dem Plattenabschnitt (162) erstreckt, enthält, und das Kühlmittelströmungsrohr (166) mit einem Ende des Verlängerungsabschnitts (164) verbunden ist.

2. Gehäuse (100) für ein Batteriemodul nach Anspruch 1, wobei das Kühlmittelströmungsrohr (166) einstückig mit dem Plattenabschnitt (162) der Endplatte (160) ausgebildet ist.

3. Gehäuse (100) für ein Batteriemodul nach Anspruch 2, wobei der mindestens eine Verbindungsabschnitt (168) mehrere Verbindungsabschnitte (168) umfasst, und die mehreren Verbindungsabschnitte (168) sich in Richtung der Bodenplatte (130) erstrecken, und
wobei mehrere Kühlmittelströmungswege (132) mit den mehreren Verbindungsabschnitten (168) verbunden sind.

4. Gehäuse (100) für ein Batteriemodul nach Anspruch 1, wobei das Kühlmittelströmungsrohr (166) entlang eines unteren Endes einer Oberfläche der Endplatte (160) ausgebildet ist.

5. Gehäuse (100) für ein Batteriemodul nach Anspruch 1, wobei das Kühlmittelströmungsrohr (166) entlang eines oberen Endes und eines unteren Endes einer Oberfläche der Endplatte (160) ausgebildet ist.

6. Gehäuse (100) für ein Batteriemodul nach Anspruch 1, wobei, wenn die Endplatte (160) mit dem Körper (120) gekoppelt ist, der Verbindungsabschnitt (168) mit dem Kühlmittelströmungsweg (166) der Bodenplatte (130) gekoppelt ist.

7. Gehäuse (100) für ein Batteriemodul nach Anspruch 1, wobei eine Oberfläche des Plattenabschnitts (162) gitterförmig ist.

8. Gehäuse (100) für ein Batteriemodul nach Anspruch 1, wobei das Kühlmittelströmungsrohr (166), der Plattenabschnitt (162), der Verlängerungsabschnitt (164) und der Verbindungsabschnitt (168) einstückig geformt sind.

9. Ein Batteriepack (200), der umfasst:
eine Vielzahl von Batteriemodulen (240), die jeweils ein Gehäuse (100) für ein Batteriemodul gemäß Anspruch 1 umfassen; und
einen Rahmen (220), der so angeordnet ist, dass er die Vielzahl von Batteriemodulen (240) umgibt.

10. Batteriepack (200) nach Anspruch 9, wobei der Rahmen (220) eine Bandform hat, bei der ein oberer Abschnitt und ein unterer Abschnitt davon offen ist.

11. Batteriepack (200) nach Anspruch 9, wobei die Vielzahl von Batteriemodulen (240) in benachbarten Batteriegehäusen (100) angeordnet sind, wobei das Kühlmittelströmungsrohr (166) in einem ersten Batteriegehäuse (100) mit einem benachbarten Kühlmittelströmungsrohr (166) in einem zweiten Batteriegehäuse (100) durch einen Verbindungsschlauch (10) verbunden ist.

12. Batteriepack (200) nach Anspruch 11, wobei der Rahmen (220) einen Kühlmitteleinlass (222) und einen Kühlmittelauslass (224) enthält, und
wobei das Kühlmittelströmungsrohr (166) mit dem Kühlmitteleinlass (222) oder dem Kühlmittelauslass (224) verbunden ist.

## Revendications

1. Boîtier (100) pour un module de batterie comprenant :
un corps (120) ayant un espace interne ; et
une plaque d'extrémité (160) disposée sur une extrémité du corps (120),
dans lequel le corps (120) inclut une plaque inférieure (130) ayant au moins une voie d'écoulement du liquide de refroidissement (132) à travers laquelle s'écoule un liquide de refroidissement, et
dans lequel la plaque d'extrémité (160) inclut un tube d'écoulement du liquide de refroidissement (166) à travers lequel le liquide de refroidissement s'écoule et au moins une partie de connexion (168) s'étendant à partir du tube d'écoulement du liquide de refroidissement (166) et couplée à au moins un chemin d'écoulement du liquide de refroidissement (132) de la plaque inférieure (130),
**caractérisé par le fait que** la plaque d'extrémité (160) inclut une partie de plaque (162) ayant une forme de treillis sur une de ses surfaces et une partie d'extension (164) s'étendant à partir de la partie de plaque (162), et le tube d'écoulement du liquide de refroidissement (166) est connecté à une extrémité de la partie d'extension (164).

2. Boîtier (100) pour module de batterie de la revendication 1, dans lequel le tube d'écoulement du liquide de refroidissement (166) est formé intégralement avec la partie de plaque (162) de la plaque d'extrémité (160).

3. Boîtier (100) pour un module de batterie de la revendication 2, dans lequel l'au moins une partie de connexion (168) comprend plusieurs parties de connexion (168), et les plusieurs parties de connexion (168) s'étendent vers la plaque inférieure (130), et
dans lequel plusieurs voies d'écoulement du liquide de refroidissement (132) sont couplées à plusieurs parties de connexion (168).

4. Boîtier (100) pour module de batterie de la revendication 1, dans lequel le tube d'écoulement du liquide de refroidissement (166) est formé le long d'une extrémité inférieure d'une surface de la plaque d'extrémité (160).

5. Boîtier (100) pour module de batterie de la revendication 1, dans lequel le tube d'écoulement du liquide de refroidissement (166) est formé le long d'une extrémité supérieure et d'une extrémité inférieure d'une surface de la plaque d'extrémité (160).

6. Boîtier (100) pour module de batterie de la revendication 1, dans lequel, lorsque la plaque d'extrémité (160) est couplée au corps (120), la partie de connexion (168) est couplée à la voie d'écoulement du liquide de refroidissement (166) de la plaque inférieure (130).

7. Boîtier (100) pour module de batterie de la revendication 1, dans lequel une surface de la partie de la plaque (162) est en forme de treillis.

8. Boîtier (100) pour module de batterie de la revendication 1, dans lequel le tube d'écoulement du liquide de refroidissement (166), la partie plaque (162), la partie extension (164) et la partie connexion (168) sont moulés d'un seul tenant.

9. Bloc-batterie (200) comprenant :
plusieurs modules de batterie (240), chacun comprenant un boîtier (100) pour un module de batterie selon la revendication 1 ; et
un cadre (220) agencé pour entourer la pluralité de modules de batterie (240).

10. Bloc-batterie (200) de la revendication 9, dans lequel le cadre a (220) une forme de bande dans laquelle une partie supérieure et une partie inférieure sont ouvertes.

11. Bloc-batterie (200) de la revendication 9, dans lequel la pluralité de modules de batteries (240) sont disposés dans des boîtiers de batteries adjacents (100), le tube d'écoulement du liquide de refroidissement (166) dans un premier boîtier de batterie (100) est connecté à un tube d'écoulement du liquide de refroidissement adjacent (166) dans un deuxième boîtier de batterie (100) par l'intermédiaire d'un tuyau de raccordement (10).

12. Bloc-batterie (200) de la revendication 11, dans lequel le cadre (220) comprend une entrée de liquide de refroidissement (222) et une sortie de liquide de refroidissement (224), et
dans lequel le tube d'écoulement du liquide de refroidissement (166) est connecté à l'entrée (222) ou à la sortie (224) du liquide de refroidissement.
